# EUROPEAN PATENT SPECIFICATION

(11) **EP 3 428 687 B1**
(45) Date of publication and mention of the grant of the patent: **11.12.2024**
(21) Application number: 17181446.0
(22) Date of filing: 14.07.2017
(51) Int. Cl.: G01S 7/499, G01S 17/42, G01S 17/931, G01S 17/89, G01S 7/481

(54) **A VISION SYSTEM AND VISION METHOD FOR A VEHICLE**
SICHTSYSTEM UND SICHTVERFAHREN FÜR EIN FAHRZEUG
SYSTÈME ET PROCÉDÉ DE VISION POUR VÉHICULE

(43) Date of publication of application: 16.01.2019
(73) Proprietor: Magna Electronics Sweden AB, 447 37 Vårgårda (SE); Beamagine S.L., 08755 Castellbisbal (ES)
(72) Inventor: ROYO, Santiago, 08755 Castellbisbal (ES); RIU, Jordi, 08660 Balsareny (ES); RODRIGO, Noel, 25005 Lleida (ES); SANABRIA, Ferran, 08912 Badalona (ES); KÄLLHAMMER, Jan-Erik, 582 46 Linköping (SE)
(74) Representative: Müller Verweyen

(56) References cited:
- EP-A1- 3 182 160
- WO-A1-2017/040066
- DE-A1- 102005 049 471
- DE-A1- 102015 217 908
- US-A1- 2008 112 029

## Description

The invention relates to a vision system for a vehicle comprising a single light source arranged on an emitting side, adapted to emit a light beam to a scanned surface in the environment of the vehicle, and a single scanning device; exactly two receiving units arranged on a receiving side and comprising one light deflection device each, one common light sensing device, and a lens arrangement with a field of view, wherein each light deflection device comprises an array of light deflection elements, wherein each light deflection element is adapted to redirect light which is incident on said light deflection element from the scanned surface, and to change the direction of the redirected light between at least a first deflection direction and a second deflection direction, the one light sensing device is adapted to sense light redirected from the light deflection devices in said first deflection direction, the lens arrangement is adapted to focus a reflected light beam from the scanned surface to the corresponding light deflection device, and a data processing device.

Such systems are generally known, for example from WO 2012 123809 A1 and WO 2014 125153 A1. Herein, a surface is illuminated by a light beam that originates from a light source and is reflected by the surface. The reflected light beam is incident on a lens arrangement transmitting the light beam towards the light deflection device where it is deflected in a specific manner to either a light sensing device or to an absorber. The time-of-flight of the light beam is indicative of the distance between the system and a point on the surface, which spatial location is derivable from information on the light deflection device and by the time-of-flight. The field of view of such systems is limited by the optical properties of the lens arrangement, its geometry and in particular the size of the entrance pupil, through which the light enters the system. Due to imaging aberrations, a large field of view requires typically a small entrance pupil and at the same time the area of the entrance pupil is proportional to the light gathering capabilities of the system. However, the amount of light passing through the entrance pupil and the lens arrangement is crucial for the light sensing capabilities of the sensing device. Thus, the size of the entrance pupil of the lens arrangement needs to balance the requirements of the field of view and sufficient light transmission. A large field of view is favorable but leads to low light sensing capabilities and requires larger power of the light source to emit a high intensity light beam leading to difficulties with power consumption, cooling, cost, durability, and eye safety constraints. A small field of view is typically not favorable.

From WO 2017/040066 A1 an imaging laser range finder including an objective lens having an optical axis is known, wherein a controllable pixelated light modulator is disposed along the optical axis on the image side of the lens. A detector is disposed optically downstream from the pixelated light modulator on the image side of the lens.

DE 10 2015 217 908 A1 discloses a lidar sensor, in particular for motor vehicles, having a light source, a movable deflection mirror to scan the environment, wherein an array of micro-optical elements is arranged at a distance to a light focusing element and an optical receiver detects light reflected from objects in the environment.

A distance sensor is known from DE 10 2005 049 471 A1, wherein the sensor has a laser diode, a controllable mirror and a lens to illuminate a measuring surface. A controllable micro-mirror array or a controllable LCD-array is used for the selection of a receiving partial surface.

EP 3 182 160 A1 shows an optoelectronic sensor for detecting an object in a monitored area, having at least one light transmitter for emitting a plurality of light beams separated from one another, a light receiver for generating received signals from light beams remitted at the object, and an evaluation unit for obtaining information about the object from the received signals.

A micro-optic shutter is known from US 2008/0112029 A1, which includes micro-optics having first and second concentrator arrays. A transducer laterally displaces one of the first and second concentrator arrays between transmissive and shuttered modes.

The object of the invention is to improve the field of view and the light sensing capabilities of the vision system and method.

The invention solves this problem with the features of the independent claims. The system according to the present invention suggests that the lens arrangement comprises a plurality of lens systems, and each one of the plurality of lens systems is adapted to focus a portion of the reflected light beam corresponding to a fraction of the field of view to the corresponding light deflection device.

According to the invention the lens arrangement, which is adapted to focus a reflected light beam from the scanned surface to the corresponding light deflection device, comprises a plurality of lens systems. A plurality of lens systems can enable more light entering the receiving units than a single lens system only, and can possibly diminish the required power of the light beam emitted by the light source. By a proper arrangement of the lens systems, the field of view can be extended compared to a single lens system. The division of the field of view can imply an improvement of the light gathering capabilities, allowing a larger diameter of the entrance pupils of the lens systems, reducing the power of the light source, and/or increasing the range of the vision system.

The invention suggests that each one of the plurality of lens systems is adapted to focus a portion of the reflected light beam corresponding to a fraction of the field of view to the corresponding light deflection device. The overall field of view is partitioned into fractions of the field of view and each lens system is adapted to focus the scanned surface corresponding to a respective fraction of the overall field of view.

The invention is applicable to any kind of vehicles, in particular motor vehicles and non-motorized vehicles, like cars, drones, boats, trains, airplanes and so on. The use of multiple imaging subsystems, i.e., segmentation of the field of view by the lens arrangement, can keep the range and power of the light source, e.g., the laser, while covering a larger field of view. In an equivalent manner, the invention can be used to keep the overall field of view and increase the attainable range. A number of design alternatives may be achieved, depending on the desired performance of the system, the number and geometrical distribution of the lens arrangements.

According to the invention, the lens arrangement is adapted to partition the field of view so that the fractions of the field of view corresponding to the plurality of lens systems overlap. The overlap can be located in different areas of the images, depending on the application. The fractions of the field of view that are defined by the lens systems can overlap or touch in order to yield data of the scanned surface to provide a connected field of view without gaps or missing features of the scanned surface.

In a preferred embodiment, the data processing device is adapted to fuse the image data from overlapping portions of the fractions. To yield a unified image the data processing device can fuse several image data corresponding to portions of the field of view together.

According to the invention, the plurality of lens systems is adapted to divide the field of view so that the fractions align horizontally. The fractions of the field of view are aligned horizontally to increase the combined field of view in the horizontal direction.

Preferably, the plurality of lens systems are arranged in a juxtaposition arrangement. Each lens system is preferably arranged side by side another lens system. The lens systems can be separated and can be inclined and/or be arranged with differing principal planes and/or optical axes to achieve a preferred set of fractions of the field of view.

According to the invention, a single light sensing device is fed by light entering a plurality of lens systems.

In a preferred embodiment each receiving unit comprises at least one shutter. Each shutter corresponds to any one of the lens systems and is adapted to change between a light blocking state and a light transmitting state. To clearly differentiate light entering different lens systems, the lens systems can be equipped with shutters. More preferably, to yield data from a certain fraction of the field of view, light enters the optical unit through a single lens system only, controlled by a single open shutter, while other shutters are closed.

According to the invention, one common light sensing device is adapted to sense the light redirected from the plurality of light deflection devices.

According to the invention, the number of light sensing devices equals one. This embodiment is particularly cost-effective, and control and data processing is particularly simple.

Preferably, each receiving unit further comprises one light detecting device adapted to detect light redirected from the light deflection device in the second deflection direction. The additional one light detection device allows the acquisition of different information of the incident light; preferably image data of different type can be recorded.

According to the invention, the one light source, the one light sensing device and the data processing device form one LIDAR system adapted to measure time-of-flight values. The time-of-flight is the runtime of the light beam and/or a portion of a light beam from the light source via reflection by the scanned surface in the vehicle's environment, until sensing by the light sensing device in the vision system. The time-of-flight corresponds to the distance between the vision system and the scanned surface, which is estimated or computed by the data processing device.

By an appropriate scanning technique, preferably realized by the deflection device and/or at least one MEMS device that directs the emitted light beam to the scanned surface, the environment can be scanned. The spatial resolution depends on the number of deflection elements comprised in the deflection device, the laser repetition rate, and on the number of light sensors comprised in the light sensing element. The measurement of the time-of-flight values can acquire depth information on a z-axis in addition to x- and y-coordinates given by the scanning procedure. In a preferred embodiment wherein the light source is a laser, the vision system comprises a LIDAR system.

In a preferred embodiment the one light sensing device comprises focal plane arrays, PIN, photo diodes, avalanche photo diodes, photomultiplier tubes, single photon avalanche diodes, or an array of any of the aforementioned, and is adapted to detect light in the range of UV, near infrared, short/mid/long wavelength infrared, and/or sub-mm/THz band, both, wideband or monochromatic, preferably wideband visible, and near infrared or short wavelength infrared. Sensors for LIDAR can be PIN photo diodes, avalanche photo diodes, single photon avalanche diodes and photomultiplier tubes, either based on Silicon, SiPM, or InGaAs technologies. Also arrays of the aforementioned devices can be comprised in the light sensing device. The radiometric measurement could preferably be used to modify the responsivity of the light sensing device to enhance stability, frame rate, and/or other features of the light sensing device. Further, an interesting feature of the system is its ability to perform foveated imaging procedures, that is, to adjust the spatial resolution in scanning or detecting some region of interest, e.g., a pedestrian or a cyclist at the side of the vehicle, or some long distance obstacle on the road.

In the following the invention shall be illustrated on the basis of preferred embodiments with reference to the accompanying drawings as non-limiting cases, wherein:
- Fig. 1: shows a schematic view of a vision system not falling under the invention;
- Fig. 2: shows an optical unit of a vision system not falling under the invention;
- Fig. 3-5: show a schematic view of an optical unit of the vision system in different embodiments not falling under the invention; and
- Fig. 6: shows a schematic view of an optical unit of the vision system in an embodiment of the invention.

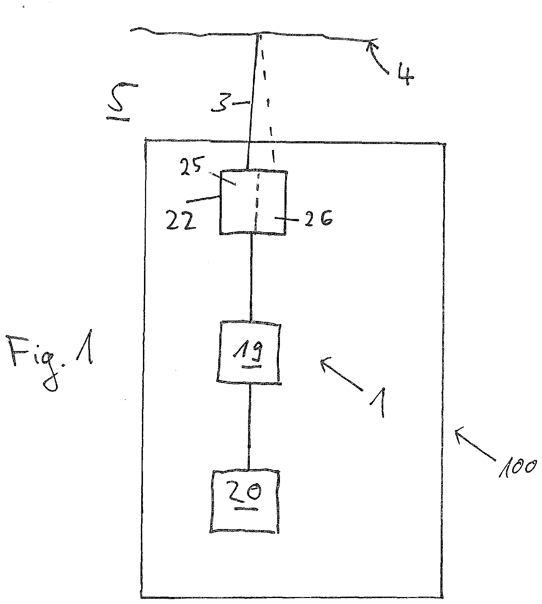

According to Figure 1, the vision system 1 is mounted in/on a vehicle 100, to capture images of a scanned surface 4 in the environment 5 of the vehicle 100. The vision system 1 comprises an optical unit 22 having a light emitting unit 25 and a light receiving unit 26, and a data processing device 19. The vision system 1 can further include other detection system and/or sensors such as radar or other cameras.

The light emitting unit 25 comprises a light source 2 that is adapted to emit a light beam 3, which is preferably directed through a first lens system 10 towards the environment 5 of the vehicle 100. The light beam 3 eventually interacts with the environment 5, in particular the scanned surface 4 or dust, snow, rain, and/or fog in the environment 5. The light beam 3 is reflected and a reflected portion 16 of the light beam 3 enters the optical unit 22, more particular the receiving unit 26 thereof, through a second lens arrangement 11. In addition to the reflected portion 16 of the light beam 3, other light from the environment 5 enters the optical unit 22, preferably through the second lens arrangement 11. The light entering the optical unit 22 is preferably recorded by the optical unit 22 and the recorded image data is processed in a combined manner with data fusion by the data processing device 19.

The driver assistance device 20 is able to trigger defined driver assistance action to assist the driver, e.g. braking, acceleration, steering, showing information etc., based on the data provided by the data processing device 19. In the embodiment shown in figure 1, the vision system 1 comprises a single optical unit 22 mounted for example in the front part of a vehicle 1 and directed for example towards the front of the vehicle 1. Other positions in/on the vehicle are also possible, for example mounted at and/or directed towards the rear, the left, and/or the right. The vision system 1 can also comprise a plurality of optical units 22 and/or a plurality of receiving units 26 that are mounted and/or directed for example towards the rear, the left, and/or the right. The viewing direction of the optical unit 22 and/or the receiving unit 26 is preferably variable. A plurality of optical units 22 and/or the receiving units 26 allows covering a wide field of view, even up to 360° around the vehicle 100. A plurality of optical units 22 and/or the receiving units 26 could communicate with separate data processing devices 19, communicate with a single data processing device 19, or work with a master-slave configuration. In particular, the images recorded from the environment 5 could be used for physical calibration of the plurality of the optical units 22 and/or the receiving units 26 to cover a large field of view. The multiplicity of imaging subsystems, defined by the lens arrangement 11, may be used to achieve a large field of view 90.

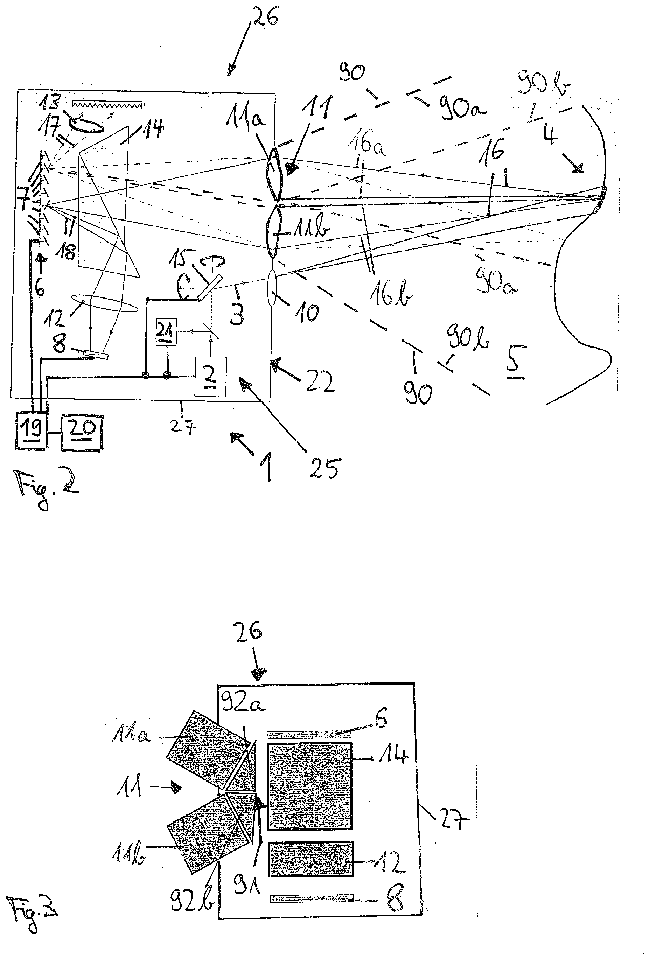

Figure 2 shows a vision system 1 in more detail. The light source 2 which is arranged in the light emitting unit 25 comprises preferably a laser, including laser diodes, fiber lasers, etc., such that the vision system 1 is a LIDAR system. But also other embodiments of the light source 2 are possible, e.g. LEDs, or polarized light sources of different wavebands, adapted to correspond with the recording capabilities of a light sensing device 8 comprised in the optical unit 22 and/or in the receiving unit 26.

In this embodiment, the light emitting unit 25 and light the receiving unit 26 are housed in the same housing 27. It is also possible to arrange the emitting unit 25 and the receiving unit 26 in different housings 27.

The use of a light source 2, or a plurality of light sources 2, corresponding to the sensing and detection capabilities of the vision system 1 could enable multi-specular methods, implementation of detection algorithms, improvement of the sensitivity of retro-reflected beams, and/or road friction estimations. The improved light gathering capabilities may be used to optimize the light beam power to reach a given range depending on the specific goals of the system and its environment 5.

The light beam 3 emitted from the light source 2 is preferably divided or split, and a portion of the light beam is directed towards a trigger device 21 comprised in the emitting unit 25 to allow an accurate time-of-flight estimation. The trigger device 21 is preferably in communication with the data processing device 19 to start and/or synchronize the time-of-flight measurement.

Another portion of the light beam 3 can in some embodiments be redirected by a scanning device 15, comprised in the emitting unit 25, for example a mirror rotatable around at least one axis. The light beam 3 can in some embodiments be widened by suited optical components, e.g., a first system of lenses 10, which may defocus, and thereby widen, the light beam 3, towards the scanned surface 4. The scanning device 15, like a mirror, a group of mirrors, a prism arrangement such as Risley prisms, and/or other optical component and/or a group thereof, is adapted to be controllable by and in communication with the data processing device 19. The scanning device 15, which may in particular be a MEMS device, is preferably adapted to be rotatable around at least two axes and/or a plurality of MEMS devices 15 is adapted to rotate around at least one axis, allowing scanning of the environment 5 of the vehicle 100. For example a first scanning device 15 could be arranged to perform the rotation around a first axis and a second scanning device 15 could be arranged to perform a rotation around a second axis. By means of the scanning device 15, the light beam 3 can be directed sequentially towards points or spots on the scanned surface 4. In another embodiment, a cylindrical lens could be used to widen the light beam 3, 29.

A portion of the light beam 3 is reflected on the scanned surface 4 or by other reflectors and/or scatterers in the environment 5, and a reflected light beam portion 16 of the light beam 3 enters the optical unit 22 and/or the receiving unit 26, e.g., by passing the lens arrangement 11, alternatively an entrance window. The first lens system 10 and the second lens arrangement 11 can coincide. The light beam portion 16 travelling through the optical unit 22 and/or the receiving unit 26 is preferably directed towards a prism 14 placed in the optical path of the light beam portion 16 within the optical unit 22 and/or the receiving unit 26, allowing for optical path division and/or light deflection.

The field of view 90 of the lens arrangement 11 is defined by the angle between the pairs of dashed lines indicated with the numeral of the field of view 90. In this embodiment, the lens arrangement 11 comprises two lens systems 11a and 11b. The fraction 90a of the field of view 90 of lens system 11a is defined by the angle between the pairs of dashed lines indicated with the numeral of the fraction 90a. The fraction 90b of field of view 90 of lens system 11b is defined by the angle between the pairs of dashed lines indicated with the numeral of the fraction 90b.

In a preferred embodiment, the lens systems 11a, 11b can be complex optical systems involving a number of different single lenses, beam splitters, polarizers, filters, diaphragms or other optical components arranged in combination in order to provide a given optical performance. Preferably, the lens systems 11a, 11b comprise lens objectives.

The overall field of view 90 is a combination of and segmented into the fractions 90a, 90b of the field of view 90. The fractions 90a, 90b are comprised by the overall field of view 90. That is, the field of view 90 of the target is divided into more than one fraction 90a, 90b by the lens arrangement 11. In this embodiment, the fractions 90a, 90b overlap and the field of view 90 is connected. In other embodiments, the fractions 90a, 90b of the field of view 90 do not overlap and the combined overall field of view 90 is disconnected.

Preferably, the lens arrangement 11 is adapted to partition the field of view 90 so that the fractions 90a, 90b overlap. The overlap of the fraction 90a, 90b can be small and allows for image matching and/or image fusion preferably by software and/or the data processing device 19. The overlap may be used to automatically reconstruct the full field of view 90 image or for other applications.

In this embodiment, the lens systems 11a, 11b are arranged side by side in juxtaposition and do not overlap, that is, the lens systems 11a, 11b are arranged in a non-sequential manner with respect to the optical path. The lens systems 11a, 11b are preferably embedded in a frame or in separate frames which are adapted to orientate the optical axes of the lens systems 11a, 11b in a desired direction. The lens system frames can touch each other or be separated. The lens systems 11a, 11b can be arranged to achieve a preferred overall field of view 90, for example, the optical axes of the lens systems 11a, 11b can be parallel, slightly tilted (<15°), tilted (15°-60°), strongly tilted (60°-90°) and/or directed into different directions (>90°). The optical axes of the lens systems 11a, 11b can be adapted according to the individual fractions 90a, 90b of the field of view 90 to yield a preferred overall field of view 90. The fractions 90a, 90b of the field of view 90 can be different for each lens arrangement 11, so as to improve the performance. The lens systems 11a, 11b with a smaller field of view will have a larger range, or need less power for the same range. The overall field of view 90 can be divided in as many fractions 90a, 90b as desired by a corresponding number of lens systems 11a, 11b. The overall field of view 90 can in principle get up to 360° if so desired, given proper arrangements are done. The number of lens systems comprised in the lens arrangement 11 is not limited to two and can be increased to meet the respective requirements.

Smaller fractions 90a, 90b of the field of view 90 enable larger entrance apertures or lens diameters, which results in better light gathering capabilities, which enable better performance of the vision system 1 due to the availability of a stronger signal. As the overall field of view 90 is divided, each single imaging subsystem, defined by the lens arrangement 11, needs to cover a fraction 90a, 90b smaller than the overall field of view 90, relaxing the trade-off between the field of view 90 and the range of the vision system 1, related to the aperture of the entrance pupil.

Each lens system 11a, 11b comprised by the lens arrangement 11 is adapted to focus a corresponding light beam portion 16a, 16b to the light deflection device 6. The light beam portions 16a, 16b are indicated in the figure by the solid lines with the numerals of the respective light beam portions 16a, 16b. The light beam portions 16a, 16b are comprised in the overall light beam portion 16 which is reflected by the scanned surface 4.

Each lens system 11a, 11b comprised by the lens arrangement 11 can preferably be linked to at least one shutter. The at least one shutter is adapted to change between a light blocking and a light transmitting state. The at least one shutter can be arranged upstream or downstream the respective lens system 11a, 11b with respect to the optical path. The shutter can be adapted to communicate with the data processing device 19 to be coordinated and/or to provide data or with the light deflection device 6 to advantageously coordinate or being coordinated. For example, if only one shutter corresponding to a particular lens system, e.g., 11a, is open while the other shutter corresponding to a particular lens system, e.g., 11b, is closed, the only light which is focused by the lens arrangement 11 is the light beam portion 16a which stems from the lens system 11a and corresponds to the fraction 90a of the overall field of view 90, reducing the ambient light sources thus improving the signal to noise ratio (SNR). A sequential shutting and closing of the individual shutters allows sequential scanning of the fractions 90a, 90b of the overall field of view 90. Preferably, the number of shutters equals the number of lens systems 11.

The light beam portion 16 is directed towards a light deflection device 6 comprising a plurality of light deflection elements 7, each of which is adapted to deflect the light beam portion 16 and to change the direction of the redirected light between at least a first deflection direction as a first light beam portion 18 and a second deflection direction as a second light beam portion 17. The first light beam portion 18 preferably is deflected via the prism 14, and is directed towards the light sensing device 8 preferably through a third lens system 12. The second light beam portion 17 is directed towards an absorber to reduce light scattering or in an alternative embodiment towards a detecting device 9 preferably via a fourth lens system 13. The first light beam portion 18 is directed to, and incident on, the light sensing device 8. The second light beam portion 17 is directed to, and incident on, the absorber or the detecting device 9.

Preferably, the light deflection device 6 is a DMD, i.e., a digital micro mirror device. The deflection device 6 is in communication with the data processing device 19. The data processing device 19 is adapted to control the deflection elements 7. Alternatives for the deflection device 6 to the DMD may be other active optical elements, in particular pixelated arrays (such as LCDs) or even deformable mirrors. Additional passive or active optical elements, such as additional DMDs, LCDs, and/or deformable mirrors, can be used in the system oriented to obtain better data quality. Active strategies for local image quality improvement using a deformable mirror in the optical path or a LCD device used as a shutter or as a phase modulator can enhance the quality of the data.

The detecting device 9 can comprise CCD/CMOS, focal plane arrays or polarimeters, or any other area or line imaging sensor composed thereof. CCD/CMOS images may be RGB or grayscale depending on the embodiment. Polarimetric images can be in a convenient format obtained after sensing and computational analysis, which could be performed in the data processing device 19 and/or a suitable processing device comprised in the detection device 9. Also polarization filters can be located in the optical path within the vision system, preferably in combination with a laser as light source 2 and/or a polarimeter as detecting device 9. The detecting device 9 can in particular comprise different sensors to detect different properties, e.g., different polarizations and/or different spectral bands. Also a detecting device 9 with varying polarizing filters on different areas (pixels) of the detecting device 9 is possible.

Additional optics either for laser spot filtering and/or for optimization of focusing on the detecting device 9 is possible. Electronics comprised in the deflection device 6, the light sensing device 8 and/or the light detecting device 9 could be coordinated or controlled by the data processing device 19. The communication between the light sensing device 8 and the data processing device 19 can also be parallel to the communication between the detecting device 9 and the data processing device 19.

The data processing device 19 can comprise a pre-processor adapted to control the capture of images, time-of-flight measurements, and/or other data by the light sensing device 8 and the detecting device 9 and the control of the deflection device 6, receive the electrical signal containing the information from the light sensing device 8 and the detecting device 9 and from the light deflection device 6. The pre-processor may be realized by a dedicated hardware circuit, for example a Field Programmable Gate Array (FPGA) or an Application Specific Integrated Circuit (ASIC). Alternatively the pre-processor, or part of its functions, can be realized in the data processing device 19 or a System-On-Chip (SoC) device comprising, for example, FPGA, processing device, ARM and/or microprocessor functionality.

Further image and data processing is carried out by corresponding software in the data processing device 19. The image and data processing in the processing device 19 may for example comprise identifying and preferably also classifying possible objects in the surrounding of the vehicle, such as pedestrians, other vehicles, bicyclists and/or large animals, tracking over time the position of object candidates identified in the captured images, computing depth images based on the time-of-flight values, and activating or controlling at least one driver assistance device 20 for example depending on an estimation performed with respect to a tracked object, for example an estimated collision probability. The driver assistance device 20 may in particular comprise a display device to display information on a possibly detected object and/or on the environment of the vehicle. However, the invention is not limited to a display device. The driver assistance device 20 may in addition or alternatively comprise a warning device adapted to provide a collision warning to the driver by suitable optical, acoustical and/or haptic warning signals; one or more restraint systems such as occupant airbags or safety belt tensioners, pedestrian airbags, hood lifters and the like; and/or dynamic vehicle control systems such as brake or steering control devices.

The data processing device 19 can also be used as input to highly automated, piloted, and/or autonomous driving functions in a vehicle.

The data processing device 19 is preferably a digital device which is programmed or programmable and preferably comprises a microprocessor, micro-controller, digital signal processor (processing device), field programmable gate array (FPGA), or a System-On-Chip (SoC) device, and preferably has access to, or comprises, a memory device. The data processing device 19, pre-processing device and the memory device are preferably realised in an on-board electronic control unit (ECU) and may be connected to other components of the vision system 1 via a separate cable or a vehicle data bus. In another embodiment the ECU and one or more of the vision systems 1 can be integrated into a single unit, where a one box solution including the ECU and all vision systems 1 can be preferred. All steps from data acquisition, imaging, depth estimations, pre-processing, processing to possible activation or control of driver assistance device are performed automatically and continuously during driving in real time.

In a particular application, LIDAR, polarimetric, RGB and/or FPA images are gathered together using electronics, including frame-grabber and the data processing device 19, to have them processed and support the decision making process of the driver assistance device 20.

All parts of the receiving unit 26, in particular the lens arrangement 11, the prism 14, the light sensing device 8 and the light deflection device 6 are preferably housed in and/or attached to the same single housing 27.

Figures 3-6 show schematic views of embodiments of the receiving unit 26 of the vision system 1, where the embodiments of Figs. 3-5 do not fall under the invention. In these embodiments, the light receiving unit 26 is housed in the housing 27, possibly separate from the light emitting unit 25. In other embodiments the light emitting unit 25 can be arranged within the shown housings 27.

Figure 3 shows a receiving unit 26 with a single deflection device 6 and a single sensing device 8. This embodiment is particularly cost-effective, compact and space-saving. The lens arrangement 11 comprises the lens systems 11a, 11b and a prism system 91 comprised by the receiving unit 26 comprises second prisms 92a, 92b. The second prisms 92a, 92b are arranged in the optical path defined by the lens systems 11a, 11b. The prism system 91 can be absent, depending on the requirements of space and optics.

Preferably, to each lens system 11a, 11b corresponds at least one prism of the prism system 91. The prisms 92a, 92b are arranged to guide the light beam portions 16a, 16b to a common prism 14 from where the light is directed towards the light deflection device 6. The light deflection device 6 can direct the light towards the light sensing device 8, preferably through the prism 14. In a typical configuration, the two imaging subsystems, defined by the lens systems 11a and 11b, divide the total field of view 90 horizontally and focus the light beam portion 16 onto a common deflection device 6, which then projects the received light onto a single light sensing device 8.

Preferably, to simplify the time-of-flight measurements the prisms 92a, 92b are arranged so that several optical paths between the lens systems 11a, 11b and the light sensing device 8 are equal. The prism system 91 can comprise other optical components to control the optical path of the light beam portion 16, e.g., mirrors, apertures, lens systems, and/or a combination thereof.

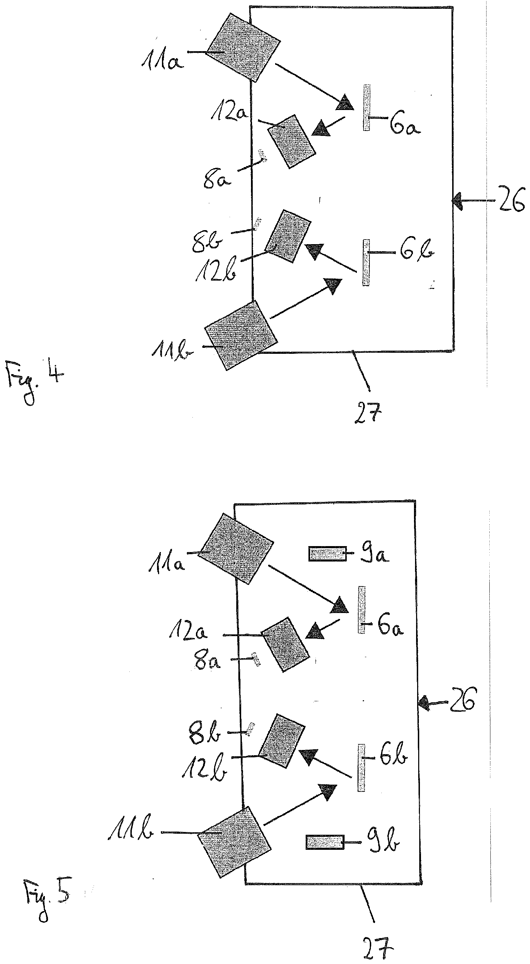

The receiving unit 26 as shown schematically in Figure 3 is conceptually simple and desirable. Depending in the optical configuration, for example if large fields of view 90 or small detector sizes are desired, one of the embodiments of Figure 4 to 5 could be advantageous, wherein the deflection device 6 and the light sensing device 8 have been duplicated in two separate arm, each having its own deflection device 6a, 6b and light sensing device 8a, 8b.

Figure 4 shows a receiving unit 26 with two deflection devices 6a, 6b and two sensing devices 8a, 8b. In this embodiment, the imaging system is doubled within the receiving unit 26 and the prism system 91 is preferably absent. The light sensing device 8a, 8b can acquire data simultaneously or sequentially in order to be processed by the data processing device 19.

Figure 5 shows a receiving unit 26 as in Figure 4 with additional light detecting devices 9a, 9b. The additional light detecting devices indicate the incorporation of other optical elements, such as CCD/CMOS for RGB or polarimetric imaging or a focal plane array (FPA), to enable simultaneous depth and image acquisition. Multiple imaging sensors, e.g., a RGB and a polarimetric sensor combined with the time-of-flight image, could be combined using suitable optical and mechanical arrangements.

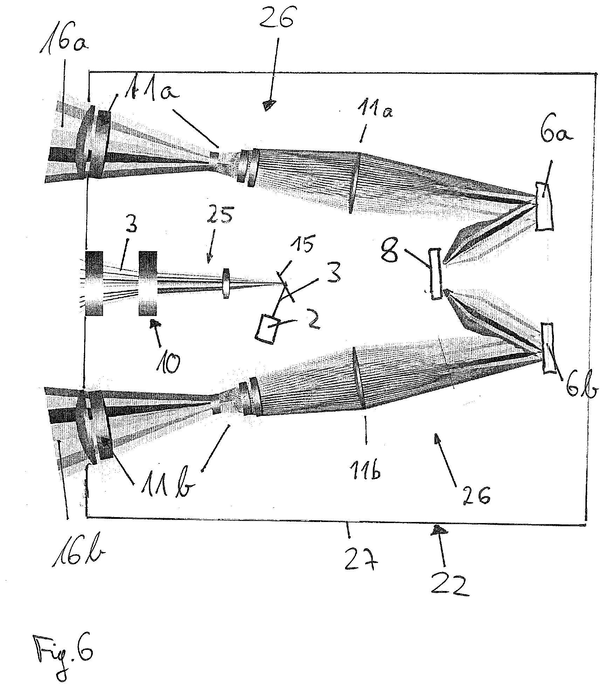

Figure 6 shows an embodiment of an optical unit 22 comprising a single light emitting unit 25, for example having a 60° scanning device 15, and two light receiving units 26, for example each having a 30° field of view to cover the whole field of view. The light emitting unit 25 comprises a single light source 2 and a single scanning device 15. In this embodiment, a single light beam 3 is emitted into the environment 5. The light beam 3 is widened by a first lens system 10 before being directed towards the scanned surface 4.

Each receiving unit 26 in Figure 6 is adapted to capture light originating from the same light emitting unit 25 and reflected by the scanned surface 4. The receiving units 26 can be identical, and can be similar to the one shown in Figure 2. However, the prism 14 shown in Figure 2 has been dispensed with in the embodiment of Figure 4, which reduces the optical losses.

Both receiving units 26 use the same light sensing device 8. In other words, the light incident on the deflection device 6a belonging to one receiving unit 26 can be deflected on the light sensing device 8, and the light incident on the other deflection device 6b belonging to the other receiving unit 26 can be deflected on the same light sensing device 8. Shortly, the common light sensing device 8 is adapted to sense light from a plurality of light deflection devices 6a, 6b. This is a very cost effective embodiment, since only one light sensing device 8 is required.

## Claims

1. A vision system (1) for a vehicle (100) comprising
- a single emitting unit (25) comprising a single light source (2) arranged on an emitting side, adapted to emit a light beam (3) to a scanned surface (4) in the environment (5) of the vehicle, and a single scanning device (15);
- exactly two receiving units (26) arranged on a receiving side and comprising one light deflection device (6a, 6b) each, one common light sensing device (8), and a lens arrangement (11) with a field of view (90),
- wherein the number of light sensing devices (8) equals one;
- wherein said two receiving units (26) use the same light sensing device (8), such that the light incident on the deflection device (6a) belonging to one receiving unit (26) can be deflected on the light sensing device (8) and the light incident on the other deflection device (6b) belonging to the other receiving unit (26) can be deflected on the same light sensing device (8); wherein
- each light deflection device (6a, 6b) comprises an array of light deflection elements (7), wherein each light deflection element (7) is adapted to redirect light which is incident on said light deflection element (7) from the scanned surface (4), and to change the direction of the redirected light between at least a first deflection direction and a second deflection direction;
- the one light sensing device (8) is adapted to sense light redirected from the light deflection devices (6a, 6b) in said first deflection direction;
- the lens arrangement (11) is adapted to focus a reflected light beam (16a, 16b) from the scanned surface (4) to the corresponding light deflection device (6a, 6b);
- a data processing device (19);
- wherein the one light source (2), the one light sensing device (8), and the data processing device (19) form one LIDAR system to measure a set of time-of-flight values; wherein
- the lens arrangement (11) comprises a plurality of lens systems (11a, 11b); and
a reflected light beam portion (16) of the light beam (3) enters the receiving units (26) by passing the lens arrangement (11), wherein
- each one of the plurality of lens systems (11a, 11b) is adapted to focus a portion (16a, 16b) of the reflected light beam (16) corresponding to a fraction (90a, 90b) of the field of view (90) to the corresponding light deflection device (6a, 6b),
the lens arrangement (11) is adapted to partition the field of view (90) so that the fractions (90a, 90b) of the field of view (90) corresponding to the plurality of lens systems (11a, 11b) overlap, wherein the plurality of lens systems (11a, 11b) is adapted to divide the field of view (90) so that the fractions (90a, 90b) align horizontally, wherein the lens systems (11a, 11b) are arranged with differing optical axes to achieve a set of fractions (90a, 90b) of the field of view (90).

2. The vision system (1) according to claim 1, **characterized in that** the data processing device (19) is adapted to fuse the image data from overlapping portions of the fractions (90a, 90b).

3. The vision system (1) as claimed in any one of the preceding claims, **characterized in that** the plurality of lens systems (11a, 11b) are arranged in a juxtaposition arrangement.

4. The vision system (1) as claimed in any one of the preceding claims, **characterized in that**
- each receiving unit (26) comprises at least one shutter; and
- each of the at least one shutter corresponds to any one of the plurality of lens systems (11a, 11b) and is adapted to change between a light blocking state and a light transmitting state.

5. The vision system (1) as claimed in any one of the preceding claims, **characterized in that** each receiving unit (26) further comprises one light detecting device (9) adapted to detect light redirected from the light deflection device (6) in the second deflection direction.

6. The vision system (1) according to any one of the preceding claims, **characterized in that** the one light sensing device (8) comprises avalanche photo diodes, photomultiplier tubes, single photon avalanche diodes, or an array of any of the aforementioned and the light sensing device (8) is adapted to detect light in the range of UV, near infrared, short/mid/long wavelength infrared, and/or sub-mm/THz band, both, wideband or monochromatic, preferably wideband visible, and near infrared or short wavelength infrared.

## Patentansprüche

1. Ein Sichtsystem (1) für ein Fahrzeug (100), das umfasst:
- eine einzelne emittierende Einheit (25), die eine einzelne Lichtquelle (2), die auf einer emittierenden Seite angeordnet ist, die dafür ausgelegt ist, einen Lichtstrahl (3) auf eine abgetastete Oberfläche (4) in der Umgebung (5) des Fahrzeugs zu emittieren, und eine einzelne Abtastvorrichtung (15) umfasst;
- genau zwei Empfangseinheiten (26), die auf einer Empfangsseite angeordnet sind und die jeweils eine Lichtablenkvorrichtung (6a, 6b), eine gemeinsame Lichterfassungsvorrichtung (8) und eine Linsenanordnung (11) mit einem Blickfeld (90) umfassen,
- wobei die Anzahl der Lichterfassungsvorrichtungen (8) gleich eins ist;
- wobei die zwei Empfangseinheiten (26) dieselbe Lichterfassungsvorrichtung (8) verwenden, sodass das auf die Ablenkvorrichtung (6a), die zu einer Empfangseinheit (26) gehört, auffallende Licht auf die Lichterfassungsvorrichtung (8) abgelenkt werden kann, und das auf die andere Ablenkvorrichtung (6b), die zu der anderen Empfangseinheit (26) gehört, auffallende Licht auf dieselbe Lichterfassungsvorrichtung (8) abgelenkt werden kann; wobei
- jede Lichtablenkvorrichtung (6a, 6b) eine Anordnung von Lichtablenkelementen (7) umfasst, wobei jedes Lichtablenkelement (7) dafür ausgelegt ist, Licht, das von der abgetasteten Oberfläche (4) auf das Lichtablenkelement (7) auffällt, umzulenken und die Richtung des umgelenkten Lichts zwischen wenigstens einer ersten Ablenkrichtung und einer zweiten Ablenkrichtung zu ändern;
- die eine Lichterfassungsvorrichtung (8) dafür ausgelegt ist, von den Lichtablenkvorrichtungen (6a, 6b) in der ersten Ablenkrichtung umgelenktes Licht zu erfassen;
- die Linsenanordnung (11) dafür ausgelegt ist, einen reflektierten Lichtstrahl (16a, 16b) von der abgetasteten Oberfläche (4) auf die entsprechende Lichtablenkvorrichtung (6a, 6b) zu fokussieren;
- eine Datenverarbeitungsvorrichtung (19);
- wobei die eine Lichtquelle (2), die eine Lichterfassungsvorrichtung (8) und die Datenverarbeitungsvorrichtung (19) ein LIDAR-System zum Messen einer Menge von Laufzeitwerten bilden; wobei
- die Linsenanordnung (11) mehrere Linsensysteme (11a, 11b) umfasst; und
ein reflektierter Lichtstrahlteil (16) des Lichtstrahls (3) durch Durchlaufen der Linsenanordnung (11) in die Empfangseinheiten (26) eintritt, wobei
- jedes der mehreren Linsensysteme (11a, 11b) dafür ausgelegt ist, einen Teil (16a, 16b) des reflektierten Lichtstrahls (16), der einem Anteil (90a, 90b) des Blickfelds (90) entspricht, auf die entsprechende Lichtablenkvorrichtung (6a, 6b) zu fokussieren,
die Linsenanordnung (11) dafür ausgelegt ist, das Blickfeld (90) in der Weise aufzuteilen, dass die Anteile (90a, 90b) des Blickfelds (90), die den mehreren Linsensystemen (11a, 11b) entsprechen, überlappen, wobei die mehreren Linsensysteme (11a, 11b) dafür ausgelegt sind, das Blickfeld (90) in der Weise aufzuteilen, dass die Anteile (90a, 90b) horizontal ausgerichtet sind, wobei die Linsensysteme (11a, 11b) mit unterschiedlichen optischen Achsen angeordnet sind, um eine Menge von Anteilen (90a, 90b) des Blickfelds (90) zu erzielen.

2. Das Sichtsystem (1) nach Anspruch 1, **dadurch gekennzeichnet, dass** die Datenverarbeitungsvorrichtung (19) dafür ausgelegt ist, die Bilddaten von überlappenden Teilen der Anteile (90a, 90b) zu fusionieren.

3. Das Sichtsystem (1) nach einem der vorhergehenden Ansprüche, **dadurch gekennzeichnet, dass** die mehreren Linsensysteme (11a, 11b) in einer Nebeneinanderanordnung angeordnet sind.

4. Das Sichtsystem (1) nach einem der vorhergehenden Ansprüche, **dadurch gekennzeichnet, dass**
- jede Empfangseinheit (26) wenigstens einen Verschluss umfasst; und
- jeder der wenigstens einen Verschlüsse irgendeinem der mehreren Linsensysteme (11a, 11b) entspricht und dafür ausgelegt ist, zwischen einem lichtundurchlässigen Zustand und einem lichtdurchlässigen Zustand überzugehen.

5. Das Sichtsystem (1) nach einem der vorhergehenden Ansprüche, **dadurch gekennzeichnet, dass** jede Empfangseinheit (26) ferner eine Lichtdetektionseinheit (9) umfasst, die dafür ausgelegt ist, von der Lichtablenkvorrichtung (6) in der zweiten Ablenkrichtung umgelenktes Licht zu detektieren.

6. Das Sichtsystem (1) nach einem der vorhergehenden Ansprüche, **dadurch gekennzeichnet, dass** die eine Lichterfassungsvorrichtung (8) Lawinenfotodioden, Fotovervielfacher, Einzelphotonen-Lawinendioden oder eine Anordnung irgendwelcher der oben erwähnten umfasst und dass die Lichterfassungsvorrichtung (8) dafür ausgelegt ist, Licht in dem Bereich des UV, des nahen Infrarot, des Infrarot kurzer/mittlerer/langer Wellenlänge und/oder des Sub-mm/THz-Bands, sowohl Breitband als auch monochromatisch, vorzugsweise Breitband sichtbar, und des nahen Infrarot oder des kurzwelligen Infrarot zu detektieren.

## Revendications

1. Système de vision (1) pour un véhicule (100) comprenant :
- une unique unité d'émission (25) comprenant une unique source lumineuse (2) disposée sur un côté émission, adaptée à émettre un faisceau lumineux (3) vers une surface balayée (4) dans l'environnement (5) du véhicule, et un unique dispositif de balayage (15) ;
- exactement deux unités de réception (26) disposées sur un côté réception et comprenant chacune un dispositif de déviation de lumière (6a, 6b), un dispositif commun de détection de lumière (8) et un agencement de lentilles (11) ayant un champ de vision (90),
- dans lequel le nombre de dispositifs de détection de lumière (8) est égal à un ;
- dans lequel lesdites deux unités de réception (26) utilisent le même dispositif de détection de lumière (8), de sorte que la lumière incidente sur le dispositif de déviation (6a) appartenant à une unité de réception (26) peut être déviée sur le dispositif de détection de lumière (8) et que la lumière incidente sur l'autre dispositif de déviation (6b) appartenant à l'autre unité de réception (26) peut être déviée sur le même dispositif de détection de lumière (8) ; dans lequel
- chaque dispositif de déviation de lumière (6a, 6b) comprend un réseau d'éléments de déviation de lumière (7), chaque élément de déviation de lumière (7) étant adapté à rediriger la lumière incidente sur ledit élément de déviation de lumière (7) à partir de la surface balayée (4) et à modifier la direction de la lumière redirigée entre au moins une première direction de déviation et une deuxième direction de déviation ;
- le dispositif de détection de lumière (8) est adapté à détecter la lumière redirigée par les dispositifs de déviation de lumière (6a, 6b) dans ladite première direction de déviation ;
- l'agencement de lentilles (11) est adapté à focaliser un faisceau lumineux réfléchi (16a, 16b) de la surface balayée (4) vers le dispositif de déviation de lumière correspondant (6a, 6b) ;
- un dispositif de traitement de données (19) ;
- dans lequel ladite source lumineuse (2), ledit dispositif de détection de lumière (8) et le dispositif de traitement de données (19) forment un système LIDAR pour mesurer un ensemble de valeurs de temps de vol ; dans lequel
- l'agencement de lentilles (11) comprend une pluralité de systèmes de lentilles (11a, 11b) ; et
une partie de faisceau lumineux réfléchi (16) du faisceau lumineux (3) pénètre dans les unités de réception (26) en passant par l'agencement de lentilles (11), dans lequel
- chacun des systèmes de lentilles (11a, 11b) est adapté à focaliser une partie (16a, 16b) du faisceau lumineux réfléchi (16) correspondant à une fraction (90a, 90b) du champ de vision (90) vers le dispositif de déviation de lumière correspondant (6a, 6b),
le dispositif de lentilles (11) est adapté à diviser le champ de vision (90) de sorte que les fractions (90a, 90b) du champ de vision (90) correspondant à la pluralité de systèmes de lentilles (11a, 11b) se chevauchent, la pluralité de systèmes de lentilles (11a, 11b) étant adaptés à diviser le champ de vision (90) de sorte que les fractions (90a, 90b) s'alignent horizontalement, les systèmes de lentilles (11a, 11b) étant disposés avec des axes optiques différents pour obtenir un ensemble de fractions (90a, 90b) du champ de vision (90).

2. Système de vision (1) selon la revendication 1, **caractérisé en ce que** le dispositif de traitement de données (19) est adapté à fusionner les données d'image provenant de parties des fractions (90a, 90b) qui se chevauchent.

3. Système de vision (1) selon l'une quelconque des revendications précédentes, **caractérisé en ce que** la pluralité de systèmes de lentilles (11a, 11b) sont disposés en juxtaposition.

4. Système de vision (1) selon l'une quelconque des revendications précédentes, **caractérisé en ce que**
- chaque unité de réception (26) comprend au moins un obturateur ; et
- chacun desdits au moins un obturateur correspond à l'un de la pluralité des systèmes de lentilles (11a, 11b) et est adapté à passer d'un état de blocage de la lumière à un état de transmission de la lumière.

5. Système de vision (1) selon l'une quelconque des revendications précédentes, **caractérisé en ce que** chaque unité de réception (26) comprend en outre un dispositif de détection de lumière (9) adapté à détecter la lumière redirigée par le dispositif de déviation de lumière (6) dans la deuxième direction de déviation.

6. Système de vision (1) selon l'une quelconque des revendications précédentes, **caractérisé en ce que** ledit dispositif de détection de lumière (8) comprend des photodiodes à avalanche, des tubes photomultiplicateurs, des diodes à avalanche à photon unique ou un réseau de l'un des dispositifs susmentionnés et que le dispositif de détection de lumière (8) est adapté à détecter la lumière dans la gamme des UV, du proche infrarouge, de l'infrarouge à courte/moyenne/longue longueur d'onde et/ou de la bande sub-mm/THz, à la fois, à large bande ou monochromatique, de préférence à large bande dans le visible et le proche infrarouge ou l'infrarouge à courte longueur d'onde.
